# EUROPEAN PATENT APPLICATION

(11) **EP 2 213 508 A2**
(43) Date of publication of application: **04.08.2010**
(21) Application number: 09075519.0
(22) Date of filing: 25.11.2009
(51) Int. Cl.: B60N 2/28

(54) **A child vehicle seat provided with at least one leg rest, as well as a chassis suitable for such a child vehicle seat**

(30) Priority: 28.01.2009 NL 1036481
(71) Applicant: Maxi Miliaan B.V., 5704 RD Helmond (NL)
(72) Inventor: De Jong, Elbreg, 5211 GZ Den Bosch (NL); Stokman, Petrus Henricus Maria, 6433 AX Hoensbroek (NL)
(74) Representative: Veldman-Dijkers, Cornelia G. C.

(57) **Abstract**

A child vehicle seat provided with at least one leg rest which can be pivoted from at least a retracted position to an extended position, and vice versa, by operating a control mechanism. The control mechanism can be operated by a child seated in the child vehicle seat. The child vehicle seat is provided with a locking mechanism for locking the leg rest in at least the retracted position and the extended position.

## Description

The invention relates to a child vehicle seat provided with at least one leg rest which can be pivoted from at least a retracted position to an extended position, and vice versa, by operating a control mechanism.

The invention also relates to a chassis suitable for use with such a child vehicle seat.

In such a child vehicle seat, which is known from U.S. patent US-5,505,519, the leg rest is movable between two extreme positions, being a retracted position and an extended position, by means of the control mechanism.

The control mechanism comprises an elongated strip, which is provided with a slot, in which an axle connected to the child vehicle seat is located. A first end of the strip is connected to the leg rest, whilst the second end of the strip is provided with a handle. A spring furthermore extends between said second end and the bottom side of the child vehicle seat. The spring exerts a relatively large force on the strip, so that moving the strip by means of the handle can only be done by an adult who is capable of exerting a sufficiently large force on the handle. The spring locks the leg rest against being moved between the retracted and the extended position by the child. Furthermore, the handle is located comparatively closer to the bottom side of the child vehicle seat, so that it is practically impossible for a child seated in the child vehicle seat to reach the handle with its arms.

The object of the invention is to provide a child vehicle seat which provides greater ease of operation.

This object is accomplished with the child vehicle seat according to the invention in that the control mechanism can be operated by a child seated in the child vehicle seat.

Since the child can operate the control mechanism, the child itself can determine the position to which the leg rest is to be moved in dependence on whether the child wishes to sit with its legs in an extended position or in a flexed position.

One embodiment of the child vehicle seat according to the invention is **characterised in that** the child vehicle seat is provided with a locking mechanism for locking the leg rest in at least the retracted position and the extended position, which locking mechanism can be unlocked by means of the control mechanism.

Since the child vehicle seat is provided with a locking mechanism, undesirable movement of the leg rest from the retracted position to the extended position, or vice versa, is not possible. The leg rest can only be pivoted to the desired position after the child has operated the control mechanism, thereby unlocking the locking mechanism.

Another embodiment of the child vehicle seat according to the invention is **characterised in that** the locking mechanism can be unlocked by means of the control mechanism, after which the leg rest can be pivoted independently of the control mechanism.

In this way the child only needs to exert a force on the control mechanism large enough for unlocking the locking mechanism. The leg rest can then be moved to the desired position by exerting a force on said leg rest.

Yet another embodiment of the child vehicle seat according to the invention is **characterised in that** the leg rest can be moved from the retracted position to the extended position under spring force, whilst the leg rest can be moved from the extended position to the retracted position against said spring force.

In this way the spring force will automatically move the leg rest to the extended position against the force of gravity.

Another embodiment of the child vehicle seat according to the invention is **characterised in that** after the locking mechanism has been unlocked by means of the control mechanism, the leg rest can be moved to the extended position or to the retracted position under spring force or against spring force, respectively.

The child only needs to unlock the locking mechanism by means of the control mechanism. The leg rest will then be automatically moved to the extended position by the spring force.

Another embodiment of the child vehicle seat according to the invention is **characterised in that** the leg rest can be moved from the extended position to the retracted position by the forces exerted on the leg rest by the child's legs.

When the child wishes to move the leg rest to the retracted position, the child will first unlock the locking mechanism by means of the control mechanism, after which the child will exert a downward force on the leg rest with its legs, as a result of which the leg rest is moved to the desired position.

Another embodiment of the child vehicle seat according to the invention is **characterised in that** the control mechanism comprises a movable slide, which is provided with at least one projection, whilst the leg rest is provided with a number of recesses, which each define a pivoted position of the leg rest and in each of which said projection can be positioned.

A projection which can be positioned in one of a number of recesses makes it possible to realise any desired number of positions in which the leg rest can be placed. When the projection is located in a recess, the leg rest is locked in the associated position. The projection is moved out of the recess by moving the slide, whereupon the leg rest can be moved to the desired position.

Yet another embodiment is **characterised in that** the child vehicle seat comprises a chassis and a seat to be detachably connected to said chassis, which chassis is at least provided with said leg rest and said control mechanism.

Since the chassis is detachably connected to the seat, it is possible to transport the seat and a chassis separately from each other. It is moreover possible to connect the chassis provided with the leg rest only to the seat when a child appreciates such a leg support. It is furthermore possible to market the chassis separately, so that the chassis can also be used with previously purchased seats.

The invention will now be explained in more detail with reference to the drawings, in which:
Figure 1 is a side view of a vehicle seat with a child vehicle seat according to the invention.
Figure 2 is a perspective exploded view of a first embodiment of a chassis for a seat of a child vehicle seat according to the invention;
Figures 3A-3E show various views of the chassis shown in figure 2, with the locking mechanism in locked position;
Figures 4A-4E show various views of the chassis shown in figure 2, with the locking mechanism in unlocked position;
Figures 5A-5C are perspective views of the chassis in an extended position, an intermediate position and a retracted position, respectively, of the leg rest;
Figure 6 shows a second embodiment of a chassis for a seat of a child vehicle seat according to the invention;
Figures 7A-7D show various views of the chassis shown in figure 6, with the locking mechanism in locked position;
Figures 8A-8D show various views of the chassis shown in figure 6, with the locking mechanism in unlocked position and a right-hand handle being operated;
Figures 9A-9D show various views of the chassis shown in figure 6, with the locking mechanism unlocked and both handles being operated;
Figure 10 is a schematic perspective view of a third embodiment of a chassis of a child vehicle seat according to the invention;
Figure 11 is a schematic perspective view of a fourth embodiment of a chassis of a child vehicle seat according to the invention;

Like parts are indicated by the same numerals in the figures.

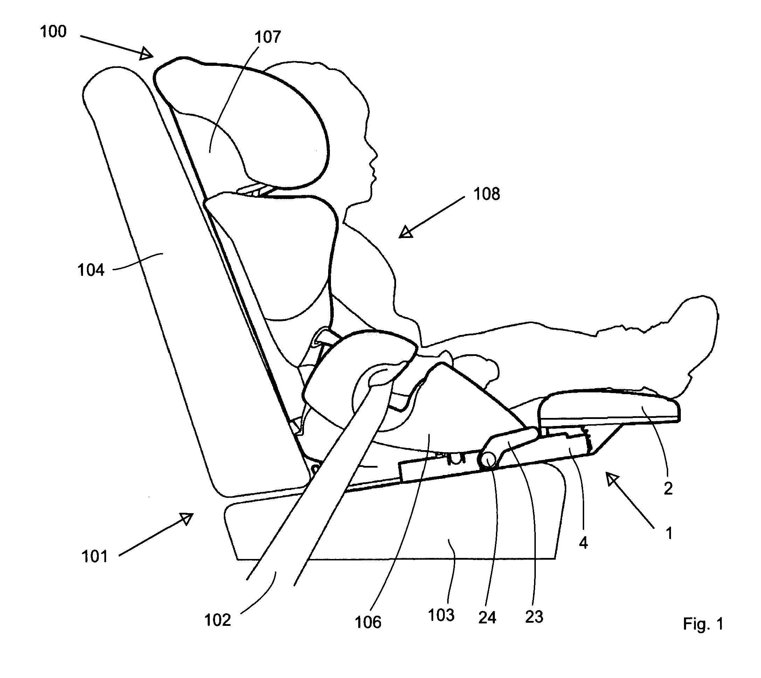

Figure 1 show a child vehicle seat 100 according to the invention which is placed on a vehicle seat 101 and attached thereto by means of a vehicle belt 102. The vehicle seat 101 comprises a seat portion 103 and a back portion 104. The child vehicle seat 100 comprises a chassis 1 and a seat 105 being detachably connected to the chassis 1. The chassis 1 is positioned on the seat portion 103 of the vehicle seat 101. The seat 105 comprises a child seat portion 106 and a child back portion 107 resting against the back portion 104 of the vehicle seat 100. A child 108 is comfortably supported by the seat 105.

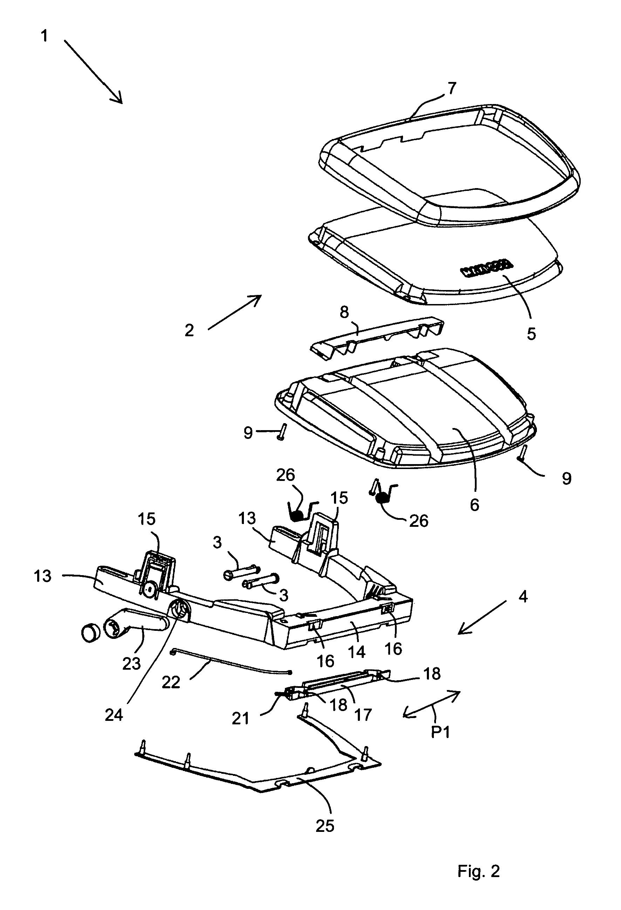

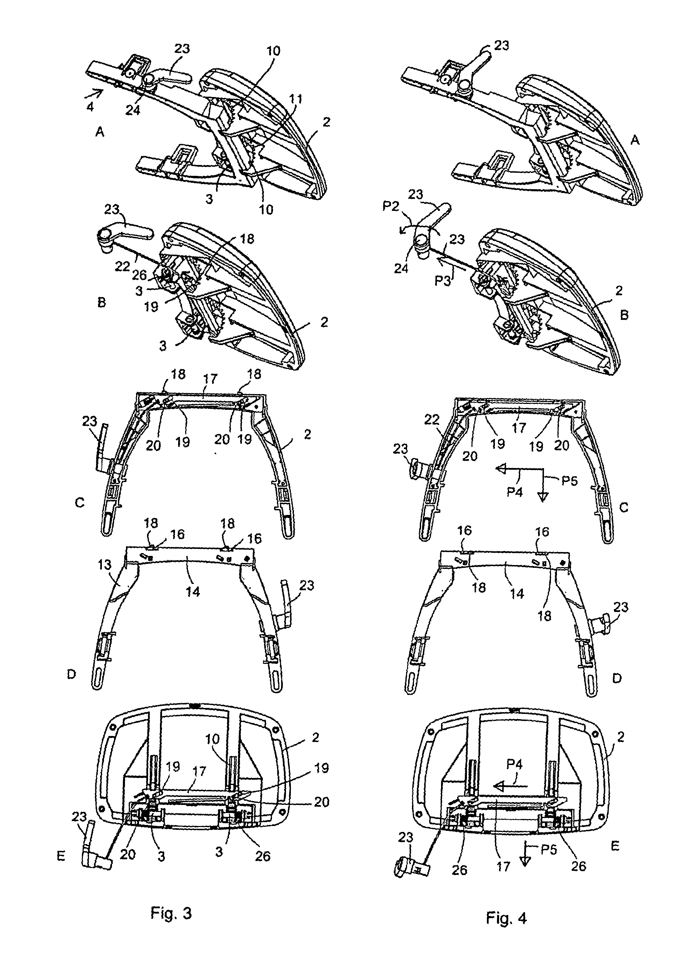

Figure 2 shows a chassis 1 of the child vehicle seat 100 according to the invention, to which the seat 105 of the child vehicle seat 100 can be detachably connected. The chassis 1 is provided with a leg rest 2, which is pivotally connected to a U-shaped frame 4 about pivot pins 3. The leg rest 2 comprises two plate-shaped segments 5, 6, a ring-shaped segment 7 and a strip-shaped segment 8. The segments 5-8 are interconnected by means of screws 9, forming a rigid unit. As is shown more clearly in figures 3A, 3B and figures 4A, 4B, the leg rest 2 is provided with two arcuate toothings 10 on its bottom side, which each comprise a number of recesses 11.

The U-shaped frame 4 comprises two leg members 13 and a bridge member 14 extending therebetween. The leg members 13 are each provided with a connecting segment 15, to which the seat 105 can be detachably connected. The bridge member 14 is provided with two spaced-apart openings 16, which spacing corresponds to the spacing between the toothings 10. The bridge member 14 accommodates a slide 17, which is movable in the directions indicated by the double arrow P1. The slide 17 is provided with two projections 18, which are located in or opposite the openings 16. See figure 3D and figure 4D, respectively. The slide 17 is provided with two slots 19 extending at an angle of about 45° to the front side of the slide 17. Located in said slots 19 are pins 20, which are rigidly connected to the bridge member 14. An end 21 of the slide 17 is connected, via a cable 22, to a handle 23, which is tiltably connected to a leg 13 of the frame 4 about a tilting axis 24. The bottom side of the frame 4 is closed by means of a U-shaped cover 25. As is clearly shown in figures 3 and 4, the leg rest 2 is pivotally connected to the frame 4 about pivot pins 3. Springs 26 surround said pins 3, which springs push the leg rest to the extended position, as is shown in figures 3 and 4.

The operation of the chassis 1 will now be explained in more detail with reference to figures 3A-3E and figures 4A-4E.

Figures 3A, 4A and 3B, 4B are perspective bottom views of the leg rest 2, with and without the legs 13 and the bridge member 14, respectively, so that the various details of the chassis 1 are clearly shown. Figures 3C and 4C are bottom views of the frame 4, whilst figures 3D and 4D are top plan views of the frame 4. Figures 3E and 4E are bottom views of the construction shown in figures 3B and 4B.

In the situation of the chassis 1 that is shown in figures 3A-3E, the leg rest 2 is in its most extended position, in which, when a child is seated in the seat 105 on the chassis 1, the child's legs extend substantially horizontally and are comfortably supported by the leg rest 2. The projections 18 extend through the openings 16 and are in engagement with the lowermost recesses 11 of the arcuate toothings 10. The leg rest 2 is thus locked in position.

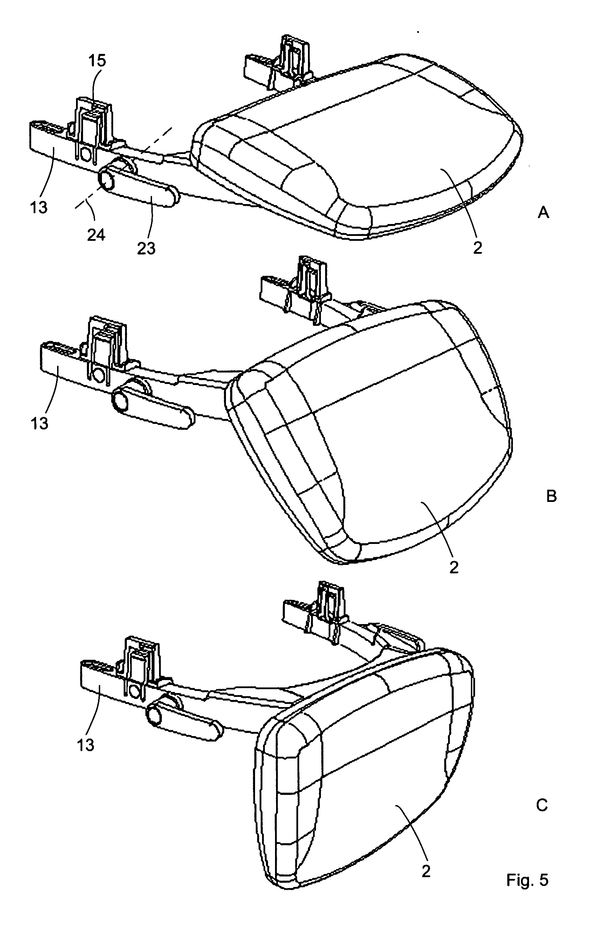

When a child wishes to move the leg rest 2 to a more retracted or vertical position, the child will take hold of the handle 23 and tilt it about the tilting axis 24 in the direction indicated by the arrow P2 (see figures 4A-4E), as a result of which the cable 22 is moved in the direction indicated by the arrow P3. Movement of the cable 23 in the direction indicated by the arrow P3 causes the slide 17 to move in the direction indicated by the arrow P4. The direction indicated by the arrow P4 extends parallel to the direction indicated by the double arrow P1. Movement of the slide 17 in the direction indicated by the arrow P4 causes the slots 19 to slide along the pins 20, as a result of which the slide 17 will also carry out a movement in the direction indicated by the arrow P5, transversely to the direction indicated by the arrow P4. As a result of said movement in the direction indicated by the arrow P5, the projections 18 connected to the slide 17 will also be moved in the direction indicated by the arrow P5, thereby moving the projections 18 out of the engagement with the recesses 11 in the arcuate toothings 10. As a result, the locking engagement of the leg rest 2 will be released. A child can subsequently pivot the leg rest 2 about the pins 3 to a desired position, as for example shown in figures 5B and 5C, by exerting forces on the leg rest 2 with its legs. Once the desired position has been reached, the child will tilt the handle 23 in the opposite direction of the arrow P2, whereby the slide 17 is being moved under spring force of a spring (not visible) in directions opposite to the directions indicated by arrows P5 and P4. As a result, the projections 18 will extend through the openings 16 again and be moved into engagement with other recesses 11 in the arcuate toothings.

The child only needs to exert a small force when operating the handle 23. The exertion of the force for moving the leg rest 2 from an extended position to a retracted position (figures 5A-5B-5C) takes place by means of the child's legs. The exertion of the force for the movement from the retracted position to the extended position (figures 5C-5B-5A) takes place via the spring force of the springs 26 after the locking engagement between the projections 18 and the recess 11 has been released.

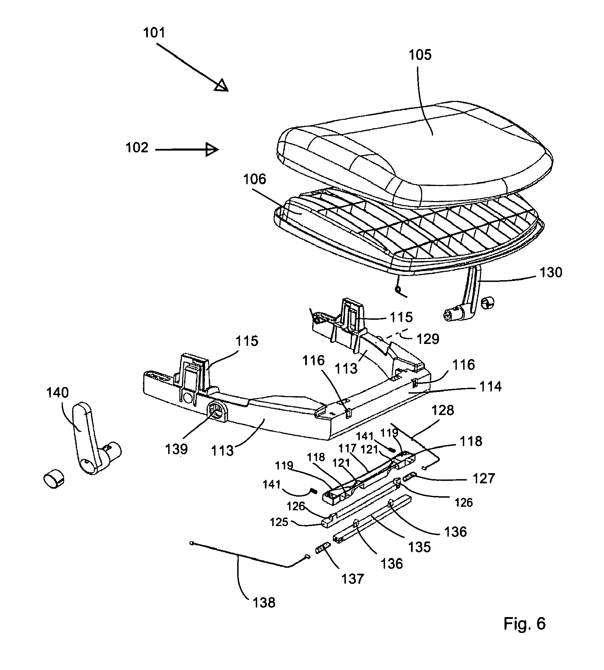

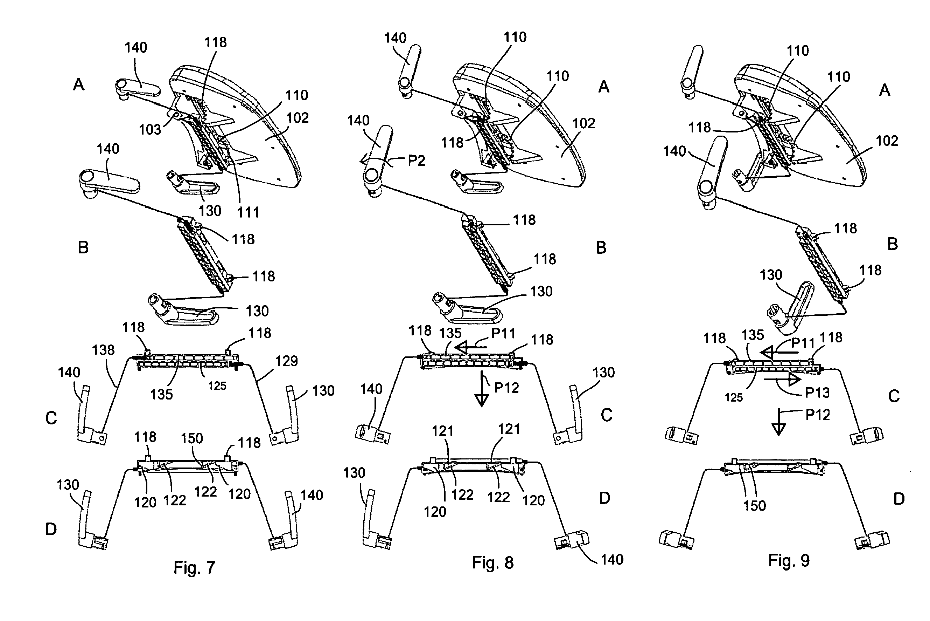

Figures 6-9 show a second embodiment of a chassis 101 provided with a leg rest 102 which is pivotally connected to a U-shaped frame 104 about pins 103. The leg rest 102 comprises two shell-shaped segments 105 and 106, which are interconnected by means of a snap connection. The leg rest 102 is provided with two arcuate toothings 110, which each comprise a number of recesses 111. The frame 104 comprises two leg members 113 and a bridge member 114 connecting said leg members 113. The leg members 113 are each provided with a connecting segment 115, to which the seat 105 can be detachably connected. The bridge member 114 is provided with two spaced-apart openings 116, which spacing corresponds to the spacing between the toothings 110. The bridge member 114 accommodates a slide 117. The slide 117 is provided with two projections 118, which are spaced the same distance apart as the openings 116. The slide 117 is further provided with two relatively large triangular recesses 119, which are located near the outer side of the slide 117. Each triangular recess 119 comprises a wall portion 120 (see figures 7D, 8D, 9D), which wall portion 120 extends at an angle to the front side of the bridge member. Located between the recesses 119 are two smaller recesses 121, which each comprise a wall portion 122 (see figures 7D, 8D, 9D), which includes an angle with the front side of the bridge member 114. The wall portions 120 and 122 are oriented in opposite directions.

The frame 104 comprises a first strip 125, which is provided with two triangular cams 126, which are located in the recesses 119. The strip 125 is connected, via a spring 127 and a cable 128, to a handle 130 which is tiltable about a tilting axis 129. The frame 104 further comprises a second strip 135, which is provided with two triangular cams 136, which are located in the recesses 121. The strip 135 is connected, via a spring 137 and a cable 138, to a handle 140 which is tiltable about a tilting axis 139.

The operation of the chassis 101 will now be explained in more detail with reference to figures 7A-7D, 8A-8D and figures 9A-9D.

Figures 7A, 8A and 9A are perspective views of the leg rest 102 and of parts of the frame 104 that are relevant in explaining the operation of the chassis 101.

Figures 7B, 8B and 9B are perspective views of the relevant parts of the frame 104.

Figures 7C, 8C and 9C are bottom views of the construction shown in figures 7B, 8B and 9B, whilst figures 7D, 8D and 9D are top plan views thereof.

In the situation shown in figure 7, the leg rest 102 is in the most extended position, in which the projections 118 are in engagement with the lowermost recesses 111 of the arcuate toothings 110. The triangular cams 126 and 136 abut against the wall portions 120 and 122, respectively, near a side remote from the projections 118.

When a child wishes to move the leg rest 102 to a different position, the child will take hold of at least one of the handles 130, 140 and tilt said handle. In the situation shown in figures 8A-8D, the handle 140 has been tilted in the direction indicated by the arrow P2. As a result, a pulling force is exerted on the cable 138, causing the strip 135 to be moved in the direction indicated by the arrow P11. During said movement, the triangular cams 136 slide along the wall portions 122 until the cams 136 are located on the side of the wall portions 122 that faces towards the projections 118. Also the slide 117 is moved in a direction indicated by the arrow P12, transversely to the arrow P11, as a result of which the projections 118 are moved out of engagement with the recesses 111 of the arcuate toothings 110.
During said movement, the cams 126 slide along the wall portions 150 that extend transversely to the front side of the slide 117. The child will then exert a force on the leg rest 102 with its legs, causing the leg rest 102 to pivot about the pins 103 to a position that is desired by the child. In said desired position, the child will release the handle 140, whereupon the strip 135 will return to the position shown in figure 7 under the influence of the spring force 137. At the same time a force will be exerted on the slide 117 by the springs 141, causing the slide to return to the position shown in figures 7A-7D as well, so that the projections 118 are again moved into engagement with the recesses 111.

In the same way it is possible to operate only the handle 130.

In the situation shown in figures 9A-9D, the two handles 130, 140 are simultaneously pivoted in the direction indicated by the arrow P2 by a child. During said pivoting movement, the triangular cams 126 of the strip 125 slide along the wall portions 120 of the recesses 119, and the triangular cams 136 slide along the wall portions 122 of the recesses 121. Said movements cause the slide 117 to be moved in the direction indicated by the arrow P12, as a result of which the projections 118 are moved out of engagement with the recesses 111.

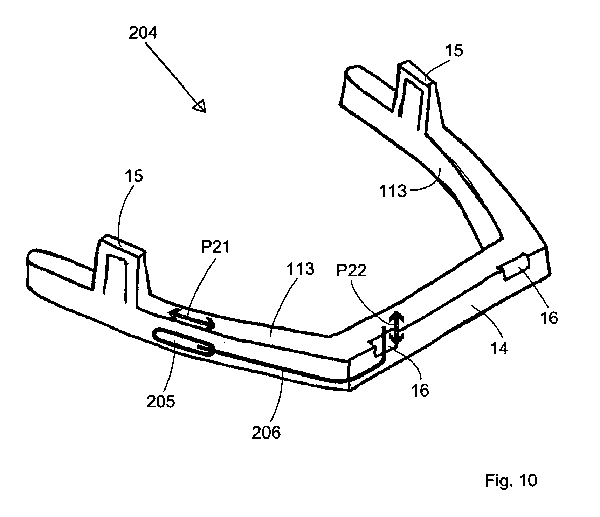

Figure 10 shows a frame 204 of another chassis of the child vehicle seat 100 according to the invention, which is provided with a handle 205, which is movable in the directions indicated by the double arrow P21. The handle 205 is connected, via a cable 206, to a projection (not shown) which is movable in the directions indicated by the double arrow P22 upon movement of the handle 205 in the directions indicated by the double arrow P21, as a result of which the projection can be moved into or out of engagement with a recess in a leg rest.

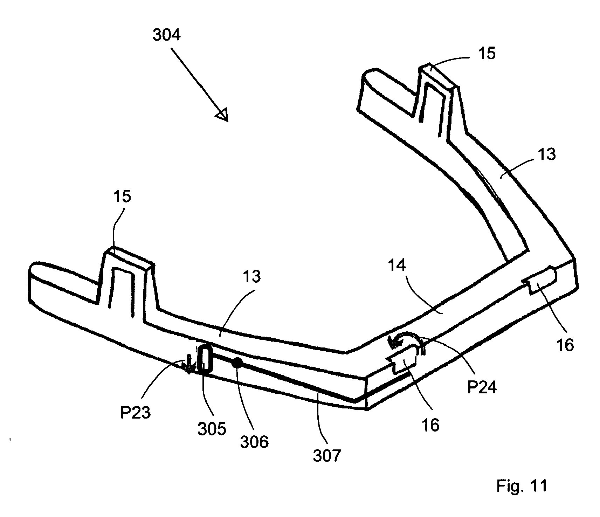

Figure 11 shows a fourth embodiment of a frame 304 of another chassis according to the invention, which is provided with a control knob 305, which is connected to a projection (not shown) located opposite an opening 16 via a lever 307 which is pivotable about a pivot 306. Movement of the control knob 305 in the downward direction indicated by the arrow P23 causes the lever 307 to be moved in upward direction near the opening 16, as a result of which a projection is pivoted in the direction indicated by the arrow P24.

It is also possible to provide the arcuate toothings with more or fewer recesses 11. Instead of using two arcuate toothings 10, it is also possible to use one arcuate toothing or more arcuate toothings.

The leg rest can be used with a child vehicle seat for use in a car, for example, but also in a vehicle like a stroller, in which case the child vehicle seat is moved forward by hand.

## Claims

1. A child vehicle seat provided with at least one leg rest which can be pivoted from at least a retracted position to an extended position, and vice versa, by operating a control mechanism, **characterised in that** said control mechanism can be operated by a child seated in the child vehicle seat.

2. A child vehicle seat according to claim 1, **characterised in that** the child vehicle seat is provided with a locking mechanism for locking the leg rest in at least the retracted position and the extended position, which locking mechanism can be unlocked by means of the control mechanism.

3. A child vehicle seat according to claim 2, **characterised in that** the locking mechanism can be unlocked by means of the control mechanism, after which the leg rest can be pivoted independently of the control mechanism.

4. A child vehicle seat according to any one of the preceding claims, **characterised in that** the leg rest can be moved from the retracted position to the extended position under spring force, whilst the leg rest can be moved from the extended position to the retracted position against said spring force.

5. A child vehicle seat according to claim 2 or 3, **characterised in that** after the locking mechanism has been unlocked by means of the control mechanism, the leg rest can be moved to the extended position or to the retracted position under spring force or against spring force, respectively.

6. A child vehicle seat according to any one of the preceding claims, **characterised in that** the leg rest can be moved from the extended position to the retracted position by the forces exerted on the leg rest by the child's legs.

7. A child vehicle seat according to any one of the preceding claims, **characterised in that** the control mechanism comprises a movable slide, which is provided with at least one projection, whilst the leg rest is provided with a number of recesses, which each define a pivoted position of the leg rest and in each of which said projection can be positioned.

8. A child vehicle seat according to claim 7, **characterised in that** the leg rest is provided with at least three recesses.

9. A child vehicle seat according to claim 7 or 8, **characterised in that** the control mechanism comprises at least one handle and at least one cable extending between the handle and the slide, which handle is movable at least between a first position and a second position, with the slide taking up a position in which a projection is in engagement with a recess or a position in which a projection is out of engagement with a recess.

10. A child vehicle seat according to claim 9, **characterised in that** the control mechanism comprises two handles disposed on either side of the child vehicle seat.

11. A child vehicle seat according to any one of the preceding claims, **characterised in that** the child vehicle seat is provided with a control mechanism on either side thereof, which control mechanisms can be operated independently of each other.

12. A child vehicle seat according to any one of the preceding claims, **characterised in that** the child vehicle seat comprises a chassis and a seat to be detachably connected to the chassis, which chassis is at least provided with said leg rest and said control mechanism.

13. A chassis suitable for a child vehicle seat according to any one of the preceding claims, which chassis is at least provided with a leg rest and with a control mechanism for operating the leg rest.
